# EUROPEAN PATENT SPECIFICATION

(11) **EP 2 173 090 B1**
(45) Date of publication and mention of the grant of the patent: **05.11.2014**
(21) Application number: 09171884.1
(22) Date of filing: 30.09.2009
(51) Int. Cl.: G06T 1/00

(54) **Method for insertion of a layout in a source image**
Verfahren zur Einbettung eines Layouts in ein Quellbild
Procédé d'insertion d'un habillage dans une image source

(30) Priority: 02.10.2008 FR 0856667
(43) Date of publication of application: 07.04.2010
(73) Proprietor: Thomson Licensing, 92130 Issy-les-Moulineaux (FR)
(72) Inventor: le Meur, Olivier, 92648, Boulogne Cedex (FR); Chamaret, Christel, 92648, Boulogne Cedex (FR); Chevet, Jean-Claude, 92648, Boulogne Cedex (FR)
(74) Representative: Huchet, Anne

(56) References cited:
- WONG A ET AL: "Practical Perceptually Adaptive Approach to Video Logo Placement in TV Broadcasts" ELECTRICAL AND COMPUTER ENGINEERING, 2007. CCECE 2007. CANADIAN CONFER ENCE ON, IEEE, PI, 1 April 2007 (2007-04-01), pages 796-799, XP031176646 ISBN: 978-1-4244-1020-0
- LE MEUR ET AL: "Predicting visual fixations on video based on low-level visual features" VISION RESEARCH, PERGAMON PRESS, OXFORD, GB, vol. 47, no. 19, 1 September 2007 (2007-09-01), pages 2483-2498, XP022237937 ISSN: 0042-6989
- MEI, T., HUA, X.-S., YANG,L. AND LI, S.: "VideoSense - Towards Effective Online Video Advertising" PROCEEDINGS OF THE 15TH INTERNATIONAL CONFERENCE ON MULTIMEDIA, 23 September 2007 (2007-09-23), - 28 September 2007 (2007-09-28) pages 1075-1084, XP002520331 Augsburg, Germany
- HUIYING LIU ET AL: "Lower attentive region detection for virtual content insertion in broadcast video" MULTIMEDIA AND EXPO, 2008 IEEE INTERNATIONAL CONFERENCE ON, IEEE, PISCATAWAY, NJ, USA, 23 June 2008 (2008-06-23), pages 1529-1532, XP031313025 ISBN: 978-1-4244-2570-9

## Description

### Domain of the invention

The present invention relates to a method for insertion of layout, such as a logo or a advertising message, in a source image sequence.

### Prior art

This layout is generally of reduced size and is placed in the bottom of the image or in a corner of the image. This location is the same whatever the content of the displayed image. Depending on the area where it is placed, this layout is not always very visible to the spectator. For example, if the layout is inserted in a area rich is visual information, it will have a reduced visual impact, which is contrary to the purpose sought by the advertiser who generally pay so that their logo or advertising message is very visible on the screen. In addition, the static localisation of the layout reduces its visual impact temporally as the spectator becomes accustomed to its presence.

The document "Practical Perceptually Adaptive Approach to Video Logo Placement in TV Braodcasts", WONG A and al, Electrical and Computer Engineering, CCECE 2007, Canadian Conference on, IEEE, PI, April 1st 2007, pages 796-799, XP031176646, relates to a practical algorithm that performs adaptive video logo placement in TV broadcasts based on a perceptual model from both spatial and temporal perspectives.

The document "Predicting visual fixations on video based on low-level visual features", LE MEUR and al, Vision Research, Pergamon Press, Oxford, GB, vol.47, no. 19, September 1st 2007, pages 2483-2498, XP022237937, describes a spatio-temporal model of the bottom-up selective visual attention, purely based on the low-level visual features.

### Summary of the invention

One purpose of the invention as defined by the independent claims is to propose a method enabling to increase the visual impact of layouthing.

For this purpose, the present invention relates to a method for insertion of a layout of reduced size, such as a logo or advertising message, in at least one image of a sequence of source images, comprising the following steps:
a) analysis of the video content of potential insertion areas of the source image and the layout and/or video content of potential insertion areas of the source image after preliminary insertion of said layout in said potential insertion areas in such a way to generate video content information,
b) selection, among said potential insertion areas, of an insertion area according to said video content information, and
c) insertion of said layout in the selected insertion area.

The video content of potential insertion areas is thus analysed and the layout is inserted in one of these areas according to the results of the analysis in such a way that its visual impact is optimized.

According to a first embodiment, step a) of the method comprises a step of modification of the potential insertion areas of the source image by inserting, in each of them, said layout and a calculation step of a salience value for each of the modified areas. The potential insertion area selected during step b) is then the potential insertion area having, after modification, the highest salience value.

Hence the area in which, after insertion of the layout, the salience is the highest, is selected. It is thus assured that this area will be a area of interest for the spectator and the layout will have a heightened visual impact for the spectator.

The salience value that is calculated for the modified potential insertion area is for example the mean value or the median value of salience values for the group of pixels of this area.

According to a variant, the salience value calculated is the mean value or median value of salience values of the pixels of the layout of this area.

According to an example, step a) of the method comprises a step of analysis of the video content of each of the potential insertion areas a such a way to determine at least one video indicator for each of the potential insertion areas and step of analysis of video content of said layout so as to determine at least in target video indicator. Step b) of the method then comprises a comparison step between the target video indicator and the video indicator of each of the potential insertion areas and a step of selection of the potential insertion area whose video indicator is the closest to the target video indicator.

In this example, the video indicators belong to the group comprising:
- the mean luminance of pixels of the potential insertion area,
- the mean chrominance of pixels of the potential insertion area, and
- the texture of the potential insertion area.

Advantageously, the potential insertion areas are preselected from among a plurality of predefined insertion areas of the image according to a predefined criterion.

According to an embodiment, the step of pre-selection comprises the following sub-steps:
- determination of a salience value for each of the potential insertion areas, and
- selection, as potential insertion areas, of predefined insertion areas having a salience value less than a threshold value.

Thus selected, as potential insertion areas, are areas of the image for which the perceptual interest is low so that the layout does not mask a region of interest of the image.

The invention also relates to a method for insertion of a layout, such as a logo or advertising message, in a sequence of n source images, comprising the following steps:
- estimation of the dominant motion of a sequence of n consecutive images comprising said source image,
- determination of areas of the first image of the sequence having a motion noticeably equal to the estimated dominant motion,
- selection, for the first image of the sequence, potential insertion areas belonging to the areas of the first image having a motion noticeably equal to the estimated dominant motion,
- insertion of the layout in the first image of the sequence in compliance with the method as previously defined, and
- insertion of the layout in the n-1 last images of the sequence according to the estimated dominant motion and the potential insertion area selected for said first image.

If the estimated dominant motion is non-null, the layout is advantageously inserted, in the n-1 last images of the sequence, in a area corresponding to the potential insertion area selected for the first image. The layout is inserted in a same area in all the images of the sequence. This appears then as a fixed object placed in a area in motion. The layout is then in motion contrast with respect to its environment, which again increases the salience of the layout.

If the estimated dominant motion is null, the layout is advantageously inserted, in each of the n-1 last images of the sequence, in a area offset spatially with respect to the potential insertion area selected for the first image, the offset being a function of the position of the image in the sequence of n images. The area where the layout is inserted is offset by p pixels with respect to the preceding image. The layout appears then as an object in motion placed in a fixed area of the sequence, which again increases the salience of the layout. As a variant, the layout is inserted in the same position in the images of the sequence while the insertion area selected does not interfere with a area of heightened salience in an image of the sequence. The layout is then offset in a area of low salience for the remaining images of the sequence.

### List of figures

The invention will be better understood, and other purposes, details, characteristics and advantages will appear more clearly over the following detailed explanatory description of several currently preferred embodiments of the invention, with reference to annexed diagrammatical drawings among which:
- figure 1 represents a flow chart of a first embodiment of the method for insertion of a layout in a source image according to the invention,
- figures 2a to 2c show the step of selection of potential insertion areas of the method illustrated by figure 1, and
- figure 3 represents a flow chart of a second embodiment of the method for insertion of a layout in a source image according to the invention,
- figure 4 represents a flow chart of a second embodiment of the method for insertion of a layout in a source image according to the invention,
- figure 5 shows the displacement of a layout in a sequence of source images whose dominant motion is null, and
- figures 6a to 6d show the case of a layout interfering with a heightened salience area in an image of the sequence.

### Detailed description of the invention

One of the purposes of the invention is that the layout to be inserted into the source image be defined so that its visual impact is at maximum. To do this, the video content of several potential insertion areas of the source image, possibly after preliminary insertion of the layout in these areas, is analysed and the area in which is inserted the layout is selected according to the results of this analysis. Hence the area in which, after insertion of the layout, the salience is the highest, is selected.

In the remainder of the description, it is understood by layout to be any type if information encrusted in a source image. This layout is for example a logo (logo of the television station broadcasting the image or a brand) or a advertising message. This layout can also be an item of information relating directly to the source images, for example the score in the case of a football match.

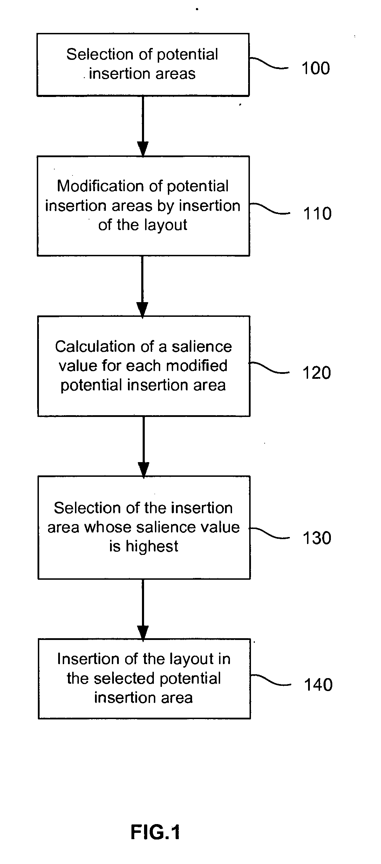

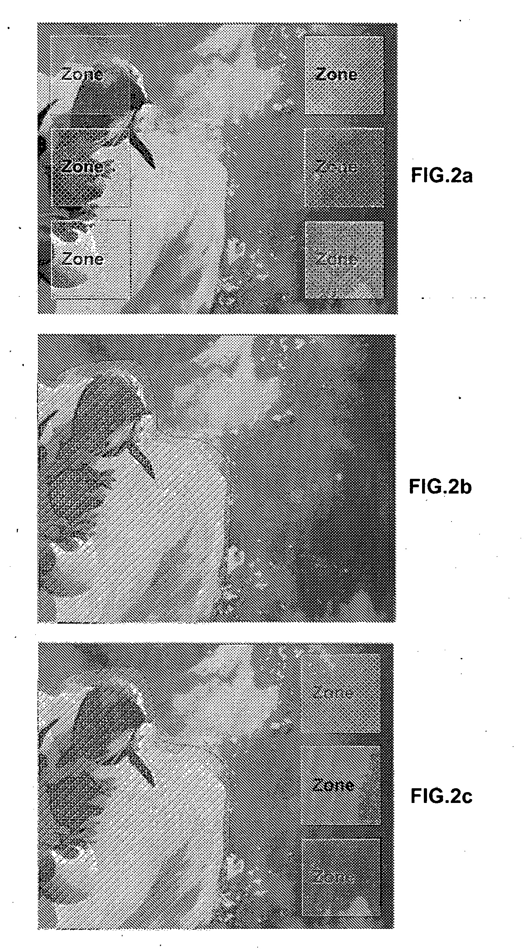

According to a first embodiment shown by **figure 1**, the method of the invention comprises a step 100 of selection of areas, called potential insertion areas, that are candidates to receive the layout. The purpose of this pre-selection step is to eliminate potential insertion areas where the layout has little chance of having a heightened visual impact. For example, if the layout is inserted in a region of interest of the image that already comprises a lot of detail, the reduced size layout will not be visible. In addition, it would mask areas of the image having a perceptual interest for the spectator. Such a step of pre-selection of potential insertion areas is shown in **figures 2a to 2c****.**

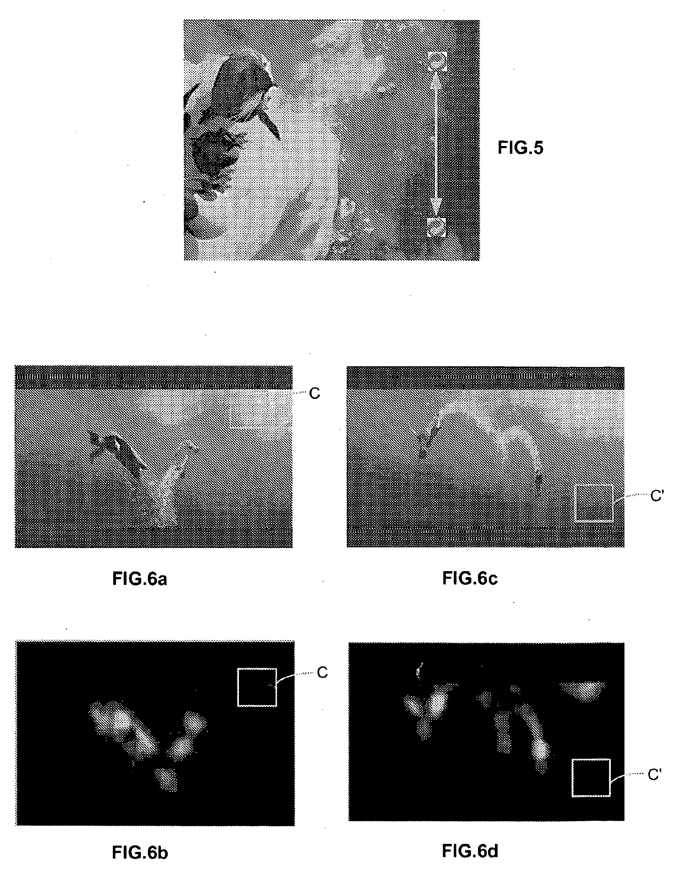

In **figure 2a**, 6 areas of the source image are predefined to receive the layout. These 6 areas are predefined in the areas of the image that are most susceptible to receive a layout, that is, the corners and the sides of the image. The video content of these 6 areas is analysed to determine if these areas are included in the regions of interest of the source image. If this is the case, the areas belonging to these regions are withdrawn from the potential insertion areas.

To define the regions or areas of interest of a source image, i.e. areas drawing the attention of the spectator, a salience map is generated of the source image, for example by applying the method described in the patent application EP 1 544 792. Such a map associates a salience value with each pixel of the source image. The higher the salience value of the pixel, the more the interest of this pixel is heightened and the more it attracts the eye of the spectator. The salience value of the pixels is for example comprised between 0 and 255 (8 bits). This map is possibly binarized with respect to a predetermined threshold. The shaded area of figure 2b shows the area of the source image having a salience value greater than a predetermined threshold and represents the region of interest of the source image.

Three of the six areas identified in figure 2a belong at least partially to this shaded area. They are therefore withdrawn from the potential insertion areas as shown in **figure 2c****.**

Again in reference to figure 1, the method then comprises a step 110 of modification of the selected potential insertion areas. This step consists in inserting the layout in each of these areas. Next are calculated, during a step 120, a salience value for each of these modified areas. To do this, a salience map is generated for the entire image or a salience map for each of the modified areas and a salience values is then calculated for each of the modified areas.

According to a particular embodiment, the salience value that is calculated for each of the modified potential insertion areas is the mean value or the median value of salience values of the group of pixels of this area.

According to another embodiment, the salience value calculated is the mean value or median value of salience values of the pixels of the layout (pixels corresponding to the layout) of this area.

The salience values thus calculated are values representative if the perceptual interest and therefore the visual impact of the modified areas.

According to the invention, is selected then, during a step 130, the potential insertion area having, after insertion of the layout, the highest salience value. The layout is inserted in a step 140 in the selected potential insertion area.

It is noted that the pre-selection step 100 is optional, the steps 120 and 130 being then applied to all the predefined potential insertion areas.

According to an example, low level video indicators are used representative of the video content of the potential insertion areas and of the layout to select the area where the layout is to be inserted. These indicators are for example:
- the mean luminance of pixels of the potential insertion area,
- the mean chrominance of pixels of the potential insertion area,
- the texture of the potential insertion area.

For example, if the mean luminance of the layout is low, this layout will not be salient in a area having a mean luminance of low value but will be so in a area where the mean luminance has a high value. In this embodiment, it is therefore proposed to compare such low level indicators to select the area where the layout is to be inserted.

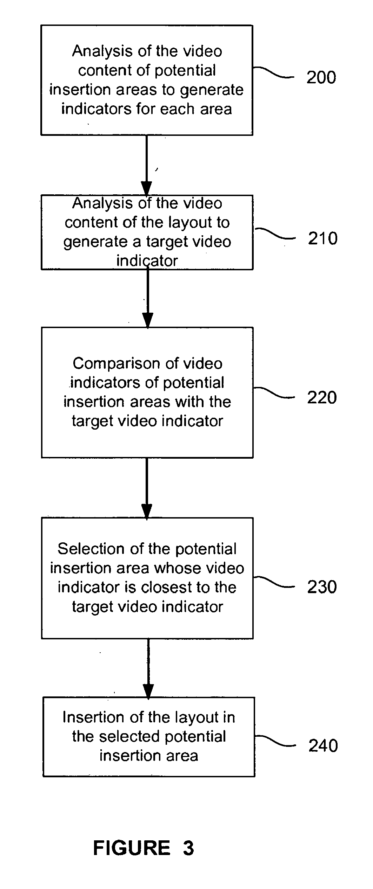

This example is illustrated by figure 3. It comprises a step 200 of video content analysis of potential insertion areas in such a way to generate at least one video indicator for each of them. The mean luminance and/or mean chrominance and/or the texture of each of the potential insertion areas is thus determined.

According to a step referenced 210, a target video indicator is then determined for the layout. This target video indicator characterizes the video content of the insertion area sought so that the layout has a heightened visual impact when inserted in this area. For example, in the case of a video indicator of mean luminance type, the target video indicator associated with a layout having a mean luminance of low value will be a mean luminance of high value. Conversely, the target video indicator associated with a layout having a mean luminance of high value will be a mean luminance of null or low value. In the case of a video indicator of mean chrominance type, the target video indicator associated with a layout having a mean chrominance corresponding to the colour red will be a mean chrominance corresponding to another colour, for example blue or green. In the case of a video indicator of texture type, the target video indicator associated with the layout is a texture having a low correlation with the texture of the layout.

It is to be noted that these video indicators, like the potential insertion areas, can be determined beforehand and transmitted conjointly to the images in the form of metadata.

According to a step 220, the target video indicator of the layout is compared with the video indicator of each of the potential insertion areas.

The potential insertion area whose video indicator is closest to the target video indicator is selected during a step 230 and the layout is inserted during a step 240 into this area.

To determine the closest video indicator, in the case of a video indicator of mean luminance type or mean chrominance type, the absolute value of the difference between the target video indicator and the video indicator of each of the potential insertion areas is calculated. The video indicator closest to the target video indicator is that for which the calculated value is lowest.

In the case of a texture type video indicator, the potential insertion area having the texture most correlated (highest correlation coefficient) with that of the target video indicator is selected.

If several video indicators are used, the absolute difference for each of the video indicators is calculated as described previously then the mean of these absolute differences is calculated, possibly after their weighting.

According to a particularity, this example comprises a pre-selection step identical to step 100.

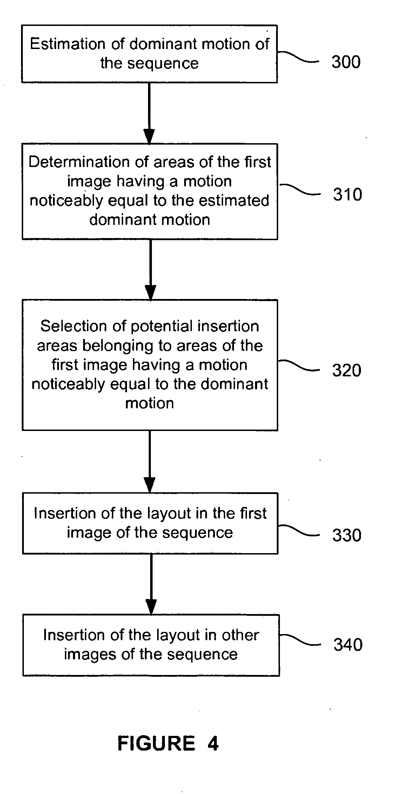

When the layout is inserted in all the images of a sequence, the visual impact of the layout can again be increased in the sequence by analysing the dominant motion of images of the sequence. The insertion of a layout in a sequence of source images is described in reference to figure 4.

The method comprises a step 300 of dominant motion estimation of the sequence. Understood by dominant motion is the background motion of the sequence of images, which generally corresponds to the camera displacement. A method for the estimation of dominant motion is for example described in the document titled "Efficient, robust and fast global motion estimation for video coding" by F.Dufaux and J.Konrad, IEEE transactions on Image Processing, vol.9, pp. 497-501, Mar. 2000.

According to a step 310, next are determined areas of the first image of the sequence having a motion noticeably equal to the estimated dominant motion. For this purpose, motion estimation is carried out, blocks of pixels by blocks of pixels, of said image. If the dominant motion is null, the areas of the first image having a motion noticeably equal to the dominant motion are the blocks of pixels having a null motion. If the dominant motion is non-null, the areas of the first image having a motion noticeably equal to the dominant motion are the blocks of pixels having a motion equal to the dominant motion.

According to step 320, next are selected, for the first image of the sequence, from among predefined potential insertion areas those belonging to the areas of the first image having a motion noticeably equal to the estimated dominant motion.

According to a step 330, next is inserted the layout in the first image of the sequence in compliance with the method described previously with reference to the figures 1 to 3. The layout is then inserted in the area of the first image whose motion conforms to the dominant motion of the sequence and whose salience, after insertion of the layout, is heightened.

According to a step 340, the layout is then inserted in the n-1 last images of the sequence according to the estimated dominant motion and the potential insertion area selected for said first image.

If the dominant motion of the sequence is non-null, the layout is advantageously inserted, in the n-1 last images of the sequence, in the same area as that selected for the first image. The layout then represents a fixed object in a area in motion. The visual impact of the layout in the sequence is then further increased with respect to a single image containing the layout.

If the estimated dominant motion is null, the layout is advantageously inserted, in each of the n-1 last images of the sequence, in a area offset spatially with respect to the potential insertion area selected for the first image, said offset being a function of the position of the image in the sequence of n images. The layout is then an object moving in a fixed area of the sequence. The visual salience of the layout is then increased with respect to a single image containing the layout.

The offset is for example uniform and equal to p pixels with respect to the preceding image. For example, is a layout centred on the pixel of coordinates (x₀,y₀) in the first image, the coordinates of the central pixel of the layout in the second image are (x₀+Δx, y₀+ Δy), then (x₀+2Δx, y₀+ 2Δy) in the third image then (x₀+i·Δx, y₀+ i·Δy) in the i^{th} image. This layout displacement is illustrated by the figure 5. The layout displaces vertically. In the first image, it is placed in the upper right of the image then displaces according to the roll-out of the sequence. If the sequence whose motion is estimated comprises n images, the offset is advantageously calculated so that the layout reaches the base of the image at the last image.

According to another embodiment, if the dominant motion of the sequence is null, the layout is inserted, in the n-1 last images of the sequence, in the same area as that selected for the first image and it is not offset as long as it does not interfere with the area of heightened salience of an image of the sequence.

This case is illustrated by the figures 6a to 6d. Figure 6a represents the first image of a video sequence and figure 6b represents a salience map of this first image. The bright points represent the pixels of heightened salience. A area, situated on the top right and delimited by a box C, is selected in a first image incompliance with the method previously described to insert a layout there. Figure 6c represents an image i of the sequence in which the area selected for the first image interferes with a area of heightened salience of the image i. It can be seen on this map that the area delimited by the box C comprises pixels of heightened salience in the image i. In this embodiment, the insertion area in the image i is therefore displaced to another area of the image, delimited by a box C', having a low salience. In the example illustrated by figures 6c and 6d, the layout insertion area is displaced towards the base. The implementation of this embodiment requires generation of a salience map for all the images of the sequence or every m images of the sequence, m being for example comprised between 20 and 30.

Though the invention has been described in relation to various specific embodiments, it is evident that this is in no way restricted and that it comprises all technical equivalents of the steps described as well as their combinations if these enter into the scope of the invention. Naturally, the method can be used to insert more than one layout in the same image or in a sequence of images.

## Claims

1. Method for insertion of a layout, such as a logo or advertising message, in at least one image of a sequence of source images, **characterized in that** it comprises the following steps:
- pre-selection (100) of areas, called potential insertion areas, having a salience value less than a threshold value among a plurality of predefined insertion areas which are most susceptible to receive said layout,
- modification (110) of the potential insertion areas by inserting, in each of them, said layout,
- calculation (120), for each of the modified areas, of a salience value from the computation of the salience values of pixels associated with said modified area,
- selection (130; 220, 230), among the potential insertion areas, of the insertion area having, after modification, the highest global salience value, and
- insertion (140; 240) of said layout in the selected insertion area.

2. Method according to claim 1, **characterized in that** the salience value calculated for a modified potential insertion area is the mean value or median value of salience values of the group of pixels of the modified potential insertion area.

3. Method according to claim 1, **characterized in that** the salience value calculated for a modified potential insertion area is the mean value or median value of salience values of the pixels of the layout of the modified potential insertion area.

4. Use of the method for insertion of a layout, such as a logo or advertising message, according to one of claims 1 to 3 applied to a sequence of n source images, comprising the following steps:
- estimation (300) of the dominant motion of a sequence of n consecutive images,
- determination (310) of areas of the first image of the sequence having a motion noticeably equal to the estimated dominant motion,
- selection (320), for the first image of the sequence, potential insertion areas belonging to the areas of the first image having a motion noticeably equal to the estimated dominant motion,
- insertion (330) of the layout in the first image of the sequence in compliance with the method according to one of claims 1 to 3, and
- insertion (340) of the layout in the n-1 last images of the sequence according to the estimated dominant motion and the potential insertion area selected for said first image.

## Patentansprüche

1. Verfahren zur Einfügung eines Layouts wie etwa eines Logos oder einer Werbebotschaft mindestens in ein Bild einer Folge von Quellbildern, **dadurch gekennzeichnet, dass** das Verfahren die folgenden Schritte umfasst:
- Vorauswahl (100) von Bereichen, potentielle Einfügebereiche genannt, mit einem Salienzwert kleiner als ein Schwellenwert, unter mehreren vorgegebenen Einfügebereichen, die zum Aufnehmen des Layouts am besten zugänglich sind,
- Änderung (110) der potentiellen Einfügebereiche durch Einfügung des Layouts in jeden von ihnen,
- Berechnung (120) eines Salienzwerts aus der Berechnung der Salienzwerte von dem geänderten Bereich zugeordneten Pixeln für jeden der geänderten Bereiche,
- Auswahl (130; 220, 230) des Einfügebereichs mit dem höchsten globalen Salienzwert nach der Änderung unter den potentiellen Einfügebereichen, und
- Einfügung (140; 240) des Layouts in den ausgewählten Einfügebereich.

2. Verfahren nach Anspruch 1, **dadurch gekennzeichnet, dass** der für einen geänderten potentiellen Einfügebereich berechnete Salienzwert der Mittelwert oder der Medianwert der Salienzwerte der Gruppe von Pixeln des geänderten potentiellen Einfügebereichs ist.

3. Verfahren nach Anspruch 1, **dadurch gekennzeichnet, dass** der für einen geänderten potentiellen Einfügebereich berechnete Salienzwert der Mittelwert oder der Medianwert der Salienzwerte der Pixel des Layouts des geänderten potentiellen Einfügebereichs ist.

4. Verwendung des Verfahrens zur Einfügung eines Layouts wie etwa eines Logos oder einer Werbebotschaft in Übereinstimmung mit einem der Ansprüche 1 bis 3, angewendet auf eine Folge von n Quellbildern, wobei das Verfahren die folgenden Schritte umfasst:
- Schätzung (300) der dominanten Bewegung einer Folge von n aufeinanderfolgenden Bildern,
- Bestimmung (310) der Bereiche des ersten Bilds der Folge mit einer merklichen Bewegung gleich der geschätzten dominanten Bewegung,
- Auswahl (320) potentieller Einfügebereiche, die zu den Bereichen des ersten Bilds mit einer merklichen Bewegung gleich der geschätzten dominanten Bewegung gehören, für das erste Bild der Folge,
- Einfügung (330) des Layouts in das erste Bild der Folge in Übereinstimmung mit dem Verfahren nach einem der Ansprüche 1 bis 3, und
- Einfügung (340) des Layouts in die n-1 letzten Bilder der Folge in Übereinstimmung mit der geschätzten dominanten Bewegung und mit dem für das erste Bild ausgewählten potentiellen Einfügebereich.

## Revendications

1. Procédé d'insertion d'un habillage, tel qu'un logo ou un message publicitaire, dans au moins une image d'une séquence d'images source, comprenant les étapes suivantes:
- pré-sélection (100) de zones, dites zone d'insertion potentielle, ayant une valeur de saillance inférieure à une valeur seuil parmi une pluralité de zones d'insertion prédéfinies qui sont les plus susceptibles de recevoir ledit habillage,
- modification (110) des zones d'insertion potentielles en insérant, dans chacune d'entre elles, ledit habillage,
- calcul (120), pour chacune des zones modifiées, d'une valeur de saillance à partir du calcul des valeurs de saillance des pixels associés à ladite zone modifiée,
- sélection (130; 220, 230), parmi lesdites zones d'insertion potentielles, d'une zone d'insertion ayant, après modification, la valeur de saillance globale la plus élevée, et
- insertion (140; 240) dudit habillage dans la zone d'insertion sélectionnée.

2. Procédé selon la revendication 1, **caractérisé en ce que** la valeur de saillance calculée pour une zone d'insertion potentielle modifiée est la valeur moyenne ou la valeur médiane des valeurs de saillance du groupe de pixels de la zone d'insertion potentielle modifiée.

3. Procédé selon la revendication 1, **caractérisé en ce que** la valeur de saillance calculée pour une zone d'insertion potentielle modifiée est la valeur moyenne ou la valeur médiane des valeurs de saillance des pixels d'habillage de la zone d'insertion potentielle modifiée.

4. Utilisation d'un procédé d'insertion d'un habillage, tel qu'un logo ou un message publicitaire, selon l'une des revendications 1 à 3 appliqué à une séquence de n images source, comprenant les étapes suivantes:
- estimation (300) du mouvement dominant d'une séquence de n images consécutives;
- détermination (310) de zones de la première image de la séquence ayant un mouvement sensiblement égal au mouvement dominant estimé,
- sélection (320), pour la première image de la séquence, de zones d'insertion potentielles appartenant aux zones de la première image ayant un mouvement sensiblement égal au mouvement dominant estimé;
- insertion (330) de l'habillage dans la première image de la séquence conformément au procédé selon l'une des revendications 1 à 3; et
- insertion (340) de l'habillage dans les n-1 dernières images de la séquence en fonction du mouvement dominant estimé et de la zone d'insertion potentielle sélectionnée pour ladite première image.
